# EUROPEAN PATENT SPECIFICATION

(11) **EP 3 157 120 B1**
(45) Date of publication and mention of the grant of the patent: **27.04.2022**
(21) Application number: 15806144.0
(22) Date of filing: 11.05.2015
(51) Int. Cl.: H02J 3/12, H02J 1/02, H02J 3/36, H02M 7/49

(54) **MODULAR MULTI-LEVEL FLEXIBLE DIRECT-CURRENT TOPOLOGY CIRCUIT SUITABLE FOR FAULT RIDE-THROUGH**
MODULARE FLEXIBLE GLEICHSTROMTOPOLOGIESCHALTUNG MIT MEHREREN EBENEN FÜR-FAULT RIDE-THROUGH
CIRCUIT À TOPOLOGIE EN COURANT CONTINU FLEXIBLE MULTINIVEAU MODULAIRE CONVENANT À UN SYSTÈME ANTI-PANNE

(30) Priority: 12.06.2014 CN 201410261139
(43) Date of publication of application: 19.04.2017
(73) Proprietor: State Grid Corporation of China, Beijing 100031 (CN); State Grid Smart Grid Research Institute, Beijing 102211 (CN); China-Epri Electric Power Engineering Co. Ltd., Beijing 102200 (CN)
(72) Inventor: YANG, Jie, Beijing 102211 (CN); HE, Zhiyuan, Beijing 102211 (CN); KONG, Ming, Beijing 102211 (CN); JI, Lanlan, Beijing 102211 (CN); MA, Weiwei, Beijing 102211 (CN)
(74) Representative: Vidon Brevets & Stratégie
(86) International application number: PCT/CN2015/078640
(87) International publication number: WO 2015/188673

(56) References cited:
- EP-A1- 3 063 860
- WO-A1-2012/163841
- WO-A1-2013/135300
- WO-A1-2014/082657
- CN-A- 102 334 274
- CN-A- 102 577 066
- CN-A- 102 804 571
- CN-A- 104 037 754
- R. FELDMAN ET AL: "A low loss modular multilevel voltage source converter for HVDC power transmission and reactive power compensation", 9TH IET INTERNATIONAL CONFERENCE ON AC AND DC POWER TRANSMISSION (ACDC 2010), 10 March 2011 (2011-03-10), pages P24-P24, XP055042508, DOI: 10.1049/cp.2010.1016 ISBN: 978 1 84919 308 5
- TRAINER D R ET AL: "B4-111 A new Hybrid Voltage-Sourced Converter for HVDC Power Transmission", CIGRE SESSION, CIGRE, PARIS, FR, 23 August 2010 (2010-08-23), pages 1-12, XP008134692,

## Description

### Field of the Invention

The present invention relates to a topology structure, and specifically relates to a modularized multi-level flexible direct current topology circuit applicable to fault ride-through.

### Background of the Invention

A flexible direct current transmission system is a direct current transmission system based on a voltage-sourced converter taking full-controlled devices (IGBTs) as a core, has excellent performance and good application expandability, and thus has broad application prospects in many fields of wind power integration, grid interconnection, urban electricity supply, island electricity supply and the like. In recent years, the modularized multi-level flexible direct current transmission technology is developed rapidly.

The converter of the flexible direct current transmission system is a core element thereof and is used for converting electrical quantities of alternating current and direct current. The high-voltage flexible direct current converter is gradually developed from original two-level or three-level topology to present modularized multi-level topology and is composed of six bridge arms, each bridge arm is formed by a plurality of series-connected submodules (Submodules, SMs), and each submodule has a half-bridge (or full-bridge) structure composed of two (or four) IGBTs (Insulated Gate Bipolar Translators) and a capacitor. According to the working principle of the converter, a capacitor is put into a circuit or put out of the circuit by turn-on and turn-off of the IGBT devices to reasonably control in and out of the plurality of submodules, then stable voltage can be formed on the alternating current/ direct current side, and a stable system working point is formed for power transmission. However, the existing modularized multi-level technology adopting multi-submodule superposition needs a large amount of capacitors and IGBT devices, and if a full-bridge topology is adopted, more devices are needed and the price is very high, so adopting a novel topology to reduce the manufacturing cost of the system and promoting the system from cable application to overhead line application have become very important research directions.

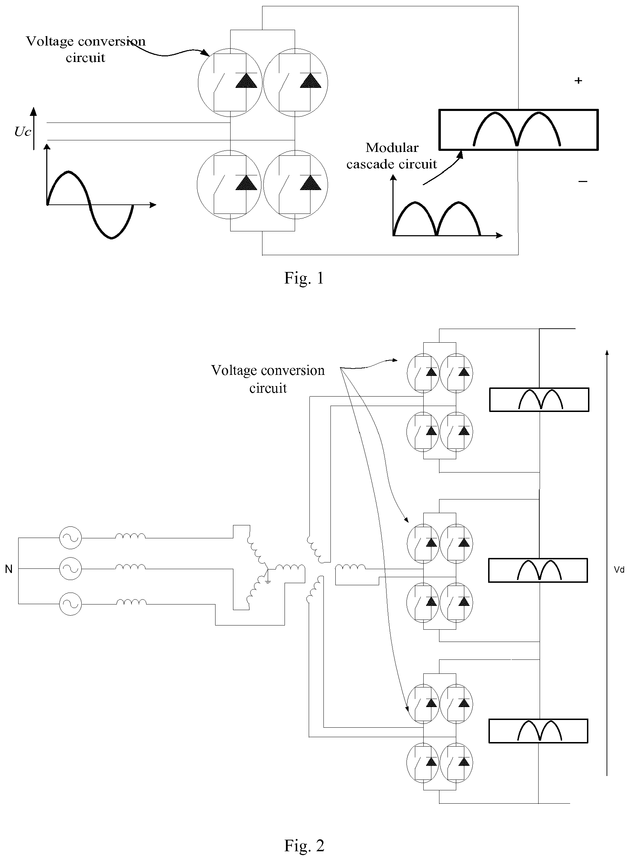

Alstom Company proposed a novel flexible direct current topology in 2010, wherein a single-phase topology structure is shown as Fig. 1, voltage |Uc| is formed by switching a valve formed by cascaded half-bridge submodules in this topology and is guided to the alternating current side by switching a full-bridge compensation circuit to form required alternating current voltage.

Fig. 2 shows a three-phase power transmission structure which is formed by serially connecting the above single-phase structures and can effectively realize power transmission, and the greatly optimized novel topology structure needs a few devices and capacitors and has great economic advantages.

However, the new topology still has some problems in application. The greatly optimized structure brings in the influence that alternating current fault ride-through needs complex modulation control, so that the system design is complex, and meanwhile, the topology cannot realize direct current fault ride-through and is greatly restricted in the field of overhead line application.

The proposition of the novel topology structure provides a brand-new method for developing flexible direct current in various fields. The novel topology is relatively low in price and low in loss, can realize large-capacity level application and thus has broad application prospects.

The novel topology structure was proposed by D.R.TRAINER et al. in Article "A New Hybrid Voltage-Sourced Converter for HVDC Power Transmission" in 2010. The topology, which adopts a series-parallel form of single-phase full-bridge structures and half-bridge submodule cascade structures to realize power transmission, is difficult to realize direct current fault ride-through, and alternating current faults also need complex control.

The patent with application No. US2012/0069610A1 proposed patent claims for the topology structure, and all the proposed topologies cannot effectively realize direct current fault ride-through and are difficult to realize alternating current fault ride-through.

The patent application published as EP 3 063 860 A1 discloses a voltage source converter comprising first and second DC terminals for connection to a DC electrical network and at least one limb connected between the first and second terminals.

The patent application published as WO 2014/082657A1 discloses a voltage source converter comprising a number of valves.

### Summary of the Invention

In order to overcome the defects of the prior art, the present invention provides a modularized multi-level flexible direct current topology circuit applicable to fault ride-through, according to the claim, which can simply and effectively realize direct current fault ride-through and thus is applicable in the field of high-voltage and large-capacity direct current overhead lines.

In order to fulfill the above aim, the present invention adopts the following technical solution:
The present invention provides a modularized multi-level flexible direct current topology circuit applicable to fault ride-through, including a modular cascade circuit, a voltage conversion circuit and a compensation circuit, wherein the modular cascade circuit is connected in parallel with the voltage conversion circuit and then connected in series with the compensation circuit.

The voltage conversion circuit is connected in parallel with the direct current outlet end of the modular cascade circuit, and the compensation circuit is positioned at the anode or the cathode of the direct current outlet of the combined structure of the voltage conversion circuit and the modular cascade circuit.

The modular cascade circuit is formed by serially connecting at least two half-bridge submodules; and the modular cascade circuit generates alternating current voltage and direct current voltage by controlling the on-off state of each half-bridge submodule.

Each half-bridge submodule is composed of two full-controlled switch devices and a capacitor, and the two full-controlled switch devices are connected in series with each other and then connected in parallel with the capacitor; the full-controlled devices output zero-sum capacitor voltage by controlling on-off thereof so as to form voltage steps; and the full-controlled switch devices are IGBTs or GTOs.

The modular cascade circuit generates absolute values of alternating current sine waves to be output by harmoniously controlling the on-off states of the plurality of half-bridge submodules in the modular cascade circuit; the alternating current sine waves are guided to the alternating current side by turning on the paired IGBTs in the voltage conversion circuit to form alternating current positive half waves; and when the voltage reaches a zero crossing point, the paired IGBTs are turned off, other paired IGBTs are turned on, the modular output voltage is inversely guided to the alternating current side to form alternating current negative half waves, and then conversion of the alternating current voltage is accomplished.

The voltage conversion circuit is formed by a power electronic H bridge structure including four bridge arms, and each bridge arm is respectively connected with an alternating current end and a direct current end and composed of a plurality of cascaded full-controlled switch devices and inversely parallel-connected diodes; the alternating current voltage output by the modular cascade circuit is guided to the alternating current side by controlling turn-on and turn-off of the IGBTs on each bridge arm to form positive half waves of the alternating current voltage, and meanwhile, the alternating current voltage output by the modular cascade circuit is inversely guided to the alternating current side by converting the on-off states of the IGBTs at the zero crossing point of the alternating current voltage to form negative half waves of the alternating current voltage.

The compensation circuit is formed by serially connecting full-bridge submodules, and is used for compensating direct current voltage in harmonic abnormity, alternating current system faults and direct current system faults under normal conditions.

Each full-bridge submodule is composed of four full-controlled switch devices and a capacitor, and the full-controlled switch devices are IGBTs or GTOs.

The compensation circuit compensates harmonics generated by the direct current voltage under the normal condition, compensates the dropped direct current voltage when an alternating current system has a fault to ensure constant direct current voltage, and generates negative total direct current voltage when a direct current system has a fault to isolate the fault.

Compared with the prior art, the present invention has the following advantages:
1, the steady-state operation performance of the original topology is effectively improved by changing the structural layout of the system;
2, alternating current/ direct current fault ride-through can be simply and effectively realized;
3, active filtering of the new topology can be realized by controlling the output level thereof in steady-state operation;
4, fault ride-through of the alternating current system can be realized by controlling in and out thereof; and
5, fault ride-through of the direct current system can be realized by controlling in and out thereof.

### Brief Description of the Drawings

Fig. 1 is a diagram of a single-phase topology structure of a flexible direct current topology in the prior art;
Fig. 2 is a diagram of a three-phase power transmission structure formed by the single-phase topology structures in Fig. 1 in the prior art;
Fig. 3 is a structural diagram of a half-bridge submodule in an embodiment of the present invention;
Fig. 4 is a structural diagram of a full-bridge submodule in an embodiment of the present invention;
Fig. 5 is a diagram of a single-phase structure of a modularized multi-level flexible direct current topology circuit applicable to fault ride-through in an embodiment of the present invention;
Fig. 6 is a diagram of a three-phase structure of a modularized multi-level flexible direct current topology circuit applicable to fault ride-through in an embodiment of the present invention.

### Detailed Description of the Embodiments

The present invention will be further described in detail below in combination with the accompanying drawings.

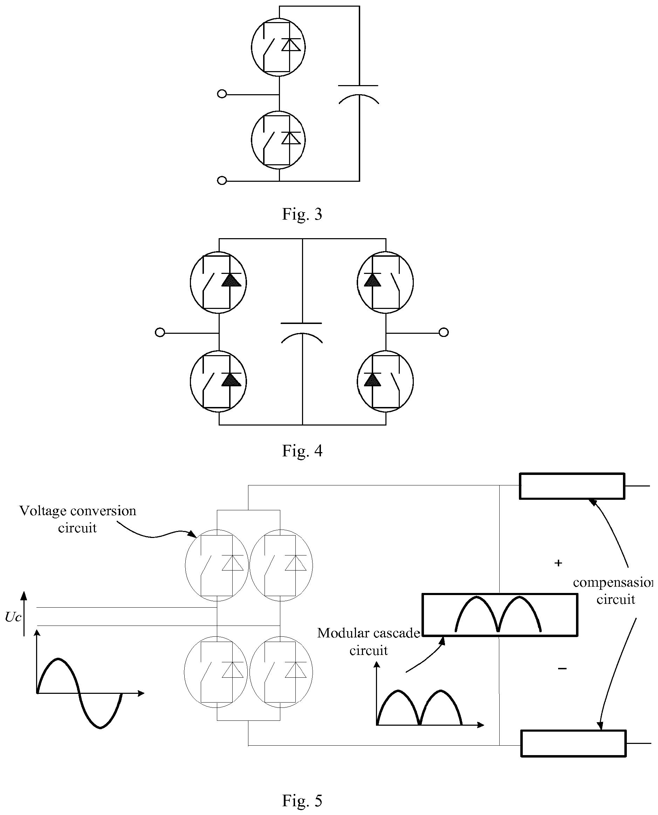

As shown in Fig. 5, the present invention provides a modularized multi-level flexible direct current topology circuit applicable to fault ride-through, including a modular cascade circuit, a voltage conversion circuit and a compensation circuit, wherein the modular cascade circuit is connected in parallel with the voltage conversion circuit and then connected in series with the compensation circuit.

The voltage conversion circuit is connected in parallel with the direct current outlet end of the modular cascade circuit, and the compensation circuit is positioned at the anode or the cathode of the direct current outlet of the combined structure of the voltage conversion circuit and the modular cascade circuit.

The modular cascade circuit is formed by serially connecting at least two half-bridge submodules; and the modular cascade circuit generates alternating current voltage and direct current voltage by controlling the on-off state of each half-bridge submodule. As shown in Fig. 3, each half-bridge submodule is composed of two full-controlled switch devices and a capacitor, and the two full-controlled switch devices are connected in series with each other and then connected in parallel with the capacitor; the full-controlled devices output zero-sum capacitor voltage by controlling on-off thereof so as to form voltage steps; and the full-controlled switch devices are IGBTs or GTOs.

The modular cascade circuit generates absolute values of alternating current sine waves to be output by harmoniously controlling the on-off states of the plurality of half-bridge submodules in the modular cascade circuit; the alternating current sine waves are guided to the alternating current side by turning on the paired IGBTs in the voltage conversion circuit to form alternating current positive half waves; and when the voltage reaches a zero crossing point, the paired IGBTs are turned off, other paired IGBTs are turned on, the modular output voltage is inversely guided to the alternating current side to form alternating current negative half waves, and then conversion of the alternating current voltage is accomplished.

The voltage conversion circuit is formed by a power electronic H bridge structure including four bridge arms, and each bridge arm is respectively connected with an alternating current end and a direct current end and composed of a plurality of cascaded full-controlled switch devices and inversely parallel-connected diodes; the alternating current voltage output by the modular cascade circuit is guided to the alternating current side by controlling turn-on and turn-off of the IGBTs on each bridge arm to form positive half waves of the alternating current voltage, and meanwhile, the alternating current voltage output by the modular cascade circuit is inversely guided to the alternating current side by converting the on-off states of the IGBTs at the zero crossing point of the alternating current voltage to form negative half waves of the alternating current voltage.

The compensation circuit is formed by serially connecting full-bridge submodules, and is used for compensating direct current voltage in harmonic abnormity, alternating current system faults and direct current system faults under normal conditions.

As shown in Fig. 4, each full-bridge submodule is composed of four full-controlled switch devices and a capacitor, and the full-controlled switch devices are IGBTs or GTOs.

The compensation circuit compensates harmonics generated by the direct current voltage under the normal condition, compensates the dropped direct current voltage when an alternating current system has a fault to ensure constant direct current voltage, and generates negative total direct current voltage when a direct current system has a fault to isolate the fault.

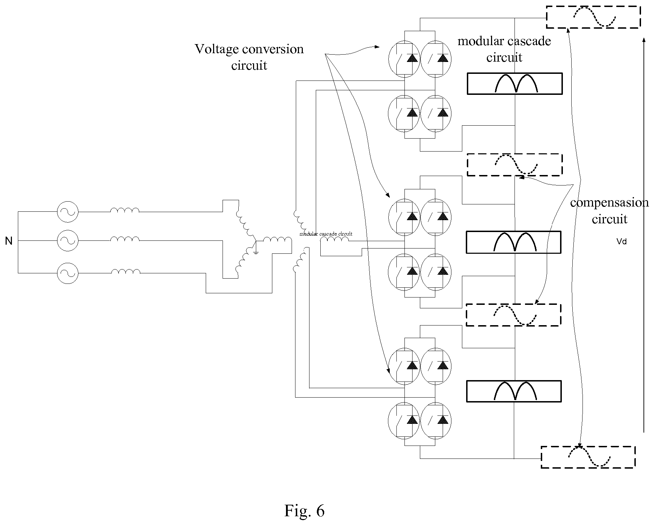

As shown in Fig. 6, the three-phase structure is formed by serially connecting the single-phase structures on the direct current side, that is, the cathode of the A phase is connected with the anode of the B phase, the cathode of the B phase is connected with The position of the compensation circuit in the three-phase structure can be changed according to actual structural requirements, e.g., the compensation circuit can be arranged at each position of Fig. 5 in any number.

By changing the overall structural layout, the new topology has the following operation characteristics:
under the normal operation condition, the direct current side of the structure, which adopts three-phase half wave superposition, has even harmonics, and the modular compensation circuit is added to reduce the quantity of the required submodules, so that the harmonics of the direct current side are eliminated and an active filtering device is formed;
under an alternating current system fault, the modules of the new topology structure output respective required voltage to maintain the current required by the output of the alternating current side, other direct current voltage is compensated by the compensation circuit, and active power is always not transmitted at the moment, so that the compensation circuit can keep energy balance; and
under a direct current system fault, the modules of the new topology structure output respective required voltage, the compensation circuit generates voltage opposite to the series superposed voltage of the modules, and active power is not transmitted, so that the compensation circuit still can maintain energy balance, meanwhile, the direct current voltage can be zero, the fault current can be reset, and the fault can be effectively cleared.

## Claims

1. A modularized multi-level flexible direct current topology circuit applicable to fault ride-through, comprising a modular cascade circuit, a voltage conversion circuit and a compensation circuit, wherein the modular cascade circuit is connected in parallel with the voltage conversion circuit and then connected in series with the compensation circuit;
wherein the voltage conversion circuit is connected in parallel with a direct current outlet end of the modular cascade circuit, and the compensation circuit is positioned at an anode or a cathode of the direct current outlet of a combined structure of the voltage conversion circuit and the modular cascade circuit;
wherein the modular cascade circuit is formed by serially connecting at least two half-bridge submodules; and the modular cascade circuit is configured to generate direct current voltage by controlling the on-off state of each half-bridge submodule;
wherein each half-bridge submodule is composed of two full-controlled switch devices and a capacitor, and the two full-controlled switch devices are connected in series with each other and then connected in parallel with the capacitor; wherein the full-controlled devices are configured to output zero-sum capacitor voltage by controlling on-off thereof so as to form voltage steps; and the full-controlled switch devices are IGBTs or GTOs;
wherein the voltage conversion circuit is formed by a power electronic H bridge structure comprising four bridge arms, each bridge arm being respectively connected with an alternating current end and a direct current end, each bridge arm being composed of a plurality of cascaded IGBTs with inversely parallel-connected diodes;
wherein the voltage conversion circuit is configured to turn on paired IGBTs in the voltage conversion circuit to form alternating current positive half waves, and when the voltage reaches a zero crossing point, to turn off the paired IGBTs and turn on other paired IGBTs in the voltage conversion circuit, to form alternating current negative half waves, thereby accomplishing conversion of direct current into alternating current;
wherein the compensation circuit is formed by serially connecting full-bridge submodules, each full-bridge submodule being composed of four full-controlled switch devices and a capacitor, and the full-controlled switch devices are IGBTs or GTOs;
**characterised in that** the compensation circuit is configured to compensate harmonics under a normal condition, to compensate a dropped direct current voltage when an alternating current system has a fault to ensure constant direct current voltage, and to generate negative total direct current voltage when a direct current system has a fault to isolate the fault.

## Patentansprüche

1. Modularisierte Mehrstufenschaltung mit flexibler Gleichstromtopologie zur Anwendung beim Durchfahren von Fehlerzuständen, mit einer modularen Kaskadenschaltung, einer Spannungsumwandlungsschaltung und einer Kompensationsschaltung, wobei die modulare Kaskadenschaltung parallel mit der Spannungsumwandlungsschaltung und dann in Reihe mit der Kompensationsschaltung geschaltet ist;
wobei die Spannungsumwandlungsschaltung parallel zu einem Gleichstromausgangsende der modularen Kaskadenschaltung geschaltet ist und die Kompensationsschaltung an einer Anode oder einer Kathode des Gleichstromausgangs einer kombinierten Struktur aus der Spannungsumwandlungsschaltung und der modularen Kaskadenschaltung angeordnet ist;
wobei die modulare Kaskadenschaltung durch serielles Schalten von mindestens zwei Halbbrückenuntermodulen gebildet ist; und die modulare Kaskadenschaltung so konfiguriert ist, dass sie Gleichspannung erzeugt, indem sie den Ein-Aus-Zustand jedes Halbbrückenuntermoduls erzeugt;
wobei jedes Halbbrückenuntermodul aus zwei vollgesteuerten Schaltvorrichtungen und einem Kondensator zusammengesetzt ist, und die zwei vollgesteuerten Schaltvorrichtungen in Reihe miteinander und dann parallel zu dem Kondensator geschaltet sind; wobei die vollgesteuerten Vorrichtungen so konfiguriert sind, dass sie Nullsumme Kondensatorspannung ausgeben, indem sie deren Ein- und Ausschalten so steuern, dass sie Spannungsstufen bilden;
und die vollgesteuerten Schaltvorrichtungen IGBTs oder GTOs sind;
wobei die Spannungsumwandlungsschaltung durch eine leistungselektronische H-Brückenstruktur gebildet ist, die vier Brückenarme umfasst, wobei jeder Brückenarm jeweils mit einem Wechselstromende und einem Gleichstromende verbunden ist, wobei jeder Brückenarm aus einer Vielzahl von kaskadierten IGBTs mit umgekehrt parallel geschalteten Dioden besteht;
wobei die Spannungsumwandlungsschaltung so konfiguriert ist, dass sie die gepaarten IGBTs in der Spannungsumwandlungsschaltung anschaltet, um positive Halbwellen des Wechselstroms zu bilden, und wenn die Spannung einen Nulldurchgangspunkt erreicht, die gepaarten IGBTs auszuschalten und andere gepaarte IGBTs in der Spannungsumwandlungsschaltung einzuschalten, um negative Halbwellen des Wechselstroms zu bilden, wodurch die Umwandlung von Gleichstrom in Wechselstrom erreicht wird;
wobei die Kompensationsschaltung durch serielles Verbinden von Vollbrückenuntermodulen gebildet ist, wobei jedes Vollbrückenuntermodul aus vier vollgesteuerten Schaltvorrichtungen und einem Kondensator besteht, und die die vollgesteuerten Schaltvorrichtungen IGBTs oder GTOs sind;
**dadurch gekennzeichnet, dass** die Kompensationsschaltung so konfiguriert ist, dass sie Oberschwingungen unter normalen Bedingungen kompensieren, um eine abgefallene Gleichspannung zu kompensieren, wenn ein Wechselstromsystem einen Fehler aufweist, um eine konstante Gleichspannung zu gewährleisten, und um eine negative Gleichstromspannung zu erzeugen, wenn ein Gleichstromsystem einen Fehler aufweist, um den Fehler zu isolieren.

## Revendications

1. Circuit à topologie en courant continu flexible multiniveau modularisé applicable à un système anti-panne, comprenant un circuit en cascade modulaire, un circuit de conversion de tension et un circuit de compensation, dans lequel le circuit en cascade modulaire est connecté en parallèle au circuit de conversion de tension et ensuite connecté en série au circuit de compensation ;
dans lequel le circuit de conversion de tension est connecté en parallèle à une extrémité de sortie de courant continu du circuit en cascade modulaire, et le circuit de compensation est positionné au niveau d'une anode ou d'une cathode de la sortie de courant continu d'une structure combinée du circuit de conversion de tension et du circuit en cascade modulaire ;
dans lequel le circuit en cascade modulaire est formé par connexion en série d'au moins deux sous-modules en demi-pont ; et le circuit en cascade modulaire est configuré pour générer une tension continue par commande de l'état marche-arrêt de chaque sous-module en demi-pont ;
dans lequel chaque sous-module en demi-pont est composé de deux dispositifs de commutation à commande complète et d'un condensateur, et les deux dispositifs de commutation à commande complète sont connectés en série l'un à l'autre et ensuite connectés en parallèle au condensateur; dans lequel les dispositifs à commande complète sont configurés pour délivrer en sortie une tension de condensateur à somme nulle par commande de marche-arrêt de ceux-ci de façon à former des échelons de tension ; et les dispositifs de commutation à commande complète sont des transistors bipolaires à porte isolée ou des thyristors GTO ;
dans lequel le circuit de conversion de tension est formé par une structure de pont en H électronique de puissance comprenant quatre bras de pont, chaque bras de pont étant respectivement connecté à une extrémité de courant alternatif et à une extrémité de courant continu, chaque bras de pont étant composé d'une pluralité de transistors bipolaires à porte isolée en cascade comportant des diodes connectées en parallèle de façon inversée ;
dans lequel le circuit de conversion de tension est configuré pour mettre sous tension des transistors bipolaires à porte isolée appariés dans le circuit de conversion de tension pour former des demi-ondes positives en courant alternatif, et lorsque la tension atteint un point de passage par zéro, pour mettre hors tension les transistors bipolaires à porte isolée appariés et mettre sous tension les autres transistors bipolaires à porte isolée appariés dans le circuit de conversion de tension, pour former des demi-ondes négatives en courant alternatif, accomplissant ainsi une conversion du courant continu en courant alternatif ;
dans lequel le circuit de compensation est formé par connexion en série de sous-modules en pont complet, chaque sous-module en pont complet étant composé de quatre dispositifs de commutation à commande complète et d'un condensateur, et les dispositifs de commutation à commande complète sont des transistors bipolaires à porte isolée ou des thyristors GTO ;
**caractérisé en ce que** le circuit de compensation est configuré pour compenser les harmoniques dans une condition normale, pour compenser une chute de tension continue lorsqu'un système de courant alternatif présente une panne pour assurer une tension continue constante, et pour générer une tension continue totale négative lorsqu'un système de courant continu présente une panne pour isoler la panne.
